Europäisches Patentamt

European Patent Office

Office européen des brevets

(11) Publication number: **0 086 876**
**B1**

# EUROPEAN PATENT SPECIFICATION

(45) Date of publication of patent specification: **29.06.88**

(51) Int. Cl.⁴: **C 01 B 25/32**

(21) Application number: **82110056.7**

(22) Date of filing: **31.10.82**

(54) **Preparation of white calcium phosphates from offcolored lime.**

(30) Priority: **23.12.81 US 333954**

(43) Date of publication of application:
**31.08.83 Bulletin 83/35**

(45) Publication of the grant of the patent:
**29.06.88 Bulletin 88/26**

(84) Designated Contracting States:
**AT BE CH DE FR GB IT LI LU NL SE**

(56) References cited:
**DE-C- 593 370**
**US-A-4 209 497**

(73) Proprietor: **FMC Corporation**
**2000 Market Street**
**Philadelphia Pennsylvania 19103 (US)**

(72) Inventor: **Munday, Theodore Fegley**
**16 Steven Road**
**Kendall Park New Jersey 08824 (US)**

(74) Representative: **Klausner, Erich et al**
**c/o Ufficio Internazionale Brevetti Ing. C. Gregorj**
**S.p.A. Via Dogana 1**
**I-20123 Milano (IT)**

Courier Press, Leamington Spa, England.

EP 0 086 876 B1

## Description

This invention relates to the production of high purity calcium phosphates.

The products of a process for producing calcium phosphates intended for food applictions must be of high purity to meet the requirements of the Food Chemicals Codex. The Food Chemicals Codex defines limits of ingredients in the calcium phosphates such as fluorides, arsenic, heavy metals, lead and the like. Also, for general acceptance in the industry, the calcium phosphate must be pure white with little or no overtones of color to the product.

As a result of these stringent requirements, food grade calcium phosphates are normally produced from phosphoric acid which is derived from thermally produced phosphorus (rather than wet acid derived phosphoric acid) and highly pure and extremely white lime (calcium hydroxide). The calcium phosphates are produced by reaction of the lime, generally hydrated lime, with phosphoric acid in the appropriate proportion to produce the calcium phosphate having the proportion of calcium to phosphorus which is desired.

Monocalcium phosphate produced by this process is normally employed in leavening agents used in baking systems. More specifically, monocalcium phosphate is used as the acidic component in baking powder employed as the leavening agent. It also finds use as a flavoring agent in soft drinks to induce an acidic tang to the drink.

If the calcium phosphate is tricalcium phosphate, this finds use as a flow promoter and anti-caking agent in table salts and beverage powders intended to be mixed with water to produce aqueous beverages. Another use is for incorporation into various powdered foods such as flour, corn meal and the like where it prevents reproduction of pests such as weevils in such foodstuff during shipment or storage for long periods.

One problem that has arisen because of the high purity requirements of food grade calcium phosphates is the very limited sources of lime that can be used to make a pure white product which also meets the Food Chemicals Codex. While the Codex requires chemically pure lime, many limes are unsuitable because they have a slight color and yield what is termed off-colored calcium phosphates. In order to permit a much wider variety of limes to be used for this purpose, it is desired to utilize a process which will produce white calcium phosphates from off-colored lime which will not impair the intended use of the thus produced calcium phosphates for food applications. While some prior art processes, such as taught in U.S. Patent 2,028,632, teach the use of chromic acid or salts of chromic acid for treating phosphate process liquors to decolorize impurities, such treatment is obviously not suitable for food grade products because of the residual impurities resulting from the chromic acid or chromic acid salts that remain in the final product.

In accordance with the present invention calcium phosphates having acceptable white color and meeting the Food Chemicals Codex can be produced from food grade phosphoric acid and off-colored lime by reacting said phosphoric acid and lime in the presence of 0.01 to 0.3 wt.% of hydrogen peroxide, based on the weight of lime used. Unexpectedly, this procedure results in a white product in which the white color extends throughout the precipitated product and which product, when milled, does not exhibit off-colored interior surfaces.

In carrying out the invention, the phosphoric acid that is employed may be of any suitable strength from 35% up to 85% by weight, with concentrations of 75% by weight normally being preferred. The phosphoric acid must be of high purity and preferably is derived from thermally produced phosphoric acid, rather than wet acid. Thermally produced phosphoric acid is made by burning phosphorus and reacting the combustion products with water to form phosphoric acid. The elemental phosphorus used as the starting material in such process is relatively pure and therefore the phosphoric acid which is formed is free of many undesirable impurities normally associated with wet acid-derived phosphoric acid produced by acidulating a phosphate rock. The phosphoric acid thus obtained from elemental phosphorus, is then treated with a sulfide source, for example hydrogen sulfide, to remove traces of heavy metals and other impurities in order to render it a food grade phosphoric acid.

The lime which is used in the present process is preferably hydrated lime $Ca(OH)_2$. However, the lime can also be quick lime (CaO) or limestone ($CaCO_3$) and it is intended that the term "lime" as used in the specification and claims encompasses all three species of these calcium salts suitable for use in the present process.

It is essential that the lime which is employed be of sufficient purity to meet the Food Chemicals Codex respecting the level of impurities which are permitted, and to employ a lime which has as little color as possible. Generally, many limes are available which are otherwise suitable but which are termed off-colored because they are not absolutely pure white, but instead have some overtones of color to them. These are perfectly suitable for use in the present invention, but it should be noted that as the lime employed increases in color, the difficulties in bleaching the lime to a pure white color increase and further, larger amounts of hydrogen peroxide will be required to effect the bleaching step. Accordingly, limes which are materially colored are not as desirable as those which are essentially white but merely off-colored.

In carrying out this process, the phosphoric acid and lime are reacted together in the proper stoichiometric proportions, preferably in the presence of water, to form the desired calcium phosphate product in the presence of hydrogen peroxide. The hydrogen peroxide is preferably added by mixing it beforehand into the phosphoric acid, so that it is always present when the reaction takes place. However, the peroxide can also be added to the lime, or lime slurry used for carrying out the reaction. Best results are obtained when the hydrogen peroxide is added to the phosphoric acid. Advantageously, the peroxide tends to be more stable in an acid environment and can be more intimately dispersed in the acid than it can be in the dry lime or aqueous lime slurry.

Very small amounts of hydrogen peroxide are required in this reaction to effect the desired white product. The small amounts of peroxide do not alter the conventional process for making calcium phosphate, and since the amount of hydrogen peroxide used is very small, the cost for the peroxide employed in this process is also small. The amount of peroxide employed is any amount from about 0.01 wt.% to 0.3 wt.% hydrogen peroxide (based on the amount of lime employed) with amounts of 0.02 wt.% to 0.1 wt.% being desired. The hydrogen peroxide may be of any concentration commonly found in commerce, for example 30% to 70% by weight. Further, while a small excess of hydrogen peroxide is not deleterious to the final product, large excesses beyond that required to achieve the desired color, are wasteful and unnecessary, and in some cases may discolor the product so that it takes on a bluish cast.

The reaction to produce tricalcium phosphate may take place in a water solution of almost any concentration since the resulting calcium phosphate product is very insoluble in water. A water medium is normally desired since this provides an ideal reaction medium and permits the tricalcium phosphate to be readily separated from unused reactants employed in the process by simple filtration, centrifugation or the like. When producing monocalcium phosphate, water is also useful as the reaction medium, but because of its higher solubility than tricalcium phosphate, the monocalcium phosphate is generally recovered by drying the reaction mixture, for example by spray drying.

During the above-described reaction of the lime and phosphoric acid, there is an exothermic acid-base neutralization and the temperature of the liquid reaction medium may increase from room temperature up to as high as 95°C, without any adverse effects.

After formation of the calcium phosphate in the presence of hydrogen peroxide, the resulting product is then dried, and where necessary, ground to size. In general, when making tricalcium phosphate, the product must be ground after drying in order to obtain the desired size. In the case of monocalcium phosphate, grinding of the entire product may not be necessary, although scalping of some large size particles coupled with grinding of the scalped particles may be necessary to arrive at an acceptably uniform size.

It is surprising that the peroxide treatment is effective in bleaching the entire precipitated particles such that after milling the product does not exhibit any off-colored surfaces which have not been treated by the hydrogen peroxide. This is considered most important since tricalcium phosphate must normally be milled to produce a satisfactory product, while monocalcium phosphate normally requires milling of only oversized product. If any of the milling operations resulted in uncovering off-colored surfaces, the product would be unacceptable for food grade use. Of course, the effect of the invention is more striking in the case of the tricalcium phosphate because much more calcium is present in this phosphate product than in monocalcium phosphate, the increased lime required to supply this calcuum normally would intensify the off-color derived from the lime.

The principle calcium phosphate products made with improved color properties by this process and which are exemplified herein have been identified as tricalcium phosphate $Ca_5OH(PO_4)_3$ and monocalcium phosphate monohydrate $Ca(H_2PO_4)_2 . H_2O$. However, other calcium phosphates are also intended to be included within the preview of this invention. These include anhydrous monocalcium phosphate, dicalcium phosphate, anhydrous dicalcium phosphate and octacalcium phosphate containing intermediate lime contents, which also exhibit the improved effects of employing hydrogen peroxide for obtaining acceptably white products when employing off-colored lime in the production of these calcium phosphates.

The following examples are given to illustrate the invention. In these examples, the final calcium phosphate products were analyzed by examination with a Hunter colorimeter to show the percent brightness and the amount of red or green coloration in one test and the amount of yellow or blue in a second test. The colorimeter employed was a Hunterlab colorimeter Model D25M-3 and the instrument was standardized against a White Standard Tile supplied with the instrument. The values of the White Standard Tile were L=92.64 a=−1.00 and b=0.30 and the instrument was standardized by adjusting it to read these values when the White Standard Tile was used as the sample under examination. Color values are repeatable to a standard deviation of 0.1 scale units with this instrument.

Example I

A tricalcium phosphate product was prepared by the following procedure: A slurry of 642 grams of hydrated lime in 1728 grams of water was prepared. To this slurry was added 660 grams of 75% phosphoric acid containing either 0.455 grams of 30% hydrogen peroxide (0.021 wt.% of the lime used) or 0.909 grams of 30% hydrogen peroxide (0.042 wt.% of the lime used) with vigorous agitation. The resulting tricalcium phosphate slurry that precipitated was spray dried and its color properties determined as set forth below. In addition, in one run the 75% phosphoric acid was added without any hydrogen peroxide being present in the acid. The colorimeter results of the samples are set forth in Table I.

It will be observed that the hydrogen peroxide treatment serves to increase the brightness, decrease

**0 086 876**

the red and decrease the yellow color of the product. It is evident that quite small amounts of hydrogen peroxide are able to provide significant changes in the color properties of the product.

Example II

The same procedure was employed as in Example I to prepare tricalcium phosphate except that the resulting product was milled using a Micropulverizer® hammermill to obtain an even finer product and the color properties of the product after milling were determined with a colorimeter. The results are set forth in Table II.

The results show that the color improvement obtained by the hydrogen peroxide treatment is not substantially affected by the milling process, particularly when the hydrogen peroxide treatment is carried out by adding the hydrogen peroxide to the acid before the acid is reacted with the lime. This is the preferred embodiment for carrying out the hydrogen peroxide treatment of the invention.

Example III

A feed slurry for producing monocalcium phosphate was prepared by mixing together 1605 grams of 75% phosphoric acid with 882 grams of water and then adding with vigorous agitation, 513 grams of hydrated lime. The resulting slurry was spray dried to form a monocalcium phosphate product. The amount of hydrogen peroxide set forth in Table III was added either to the acid prior to reaction, or directly to the slurry. The resulting products, without milling, were then subjected to a colorimeter examination and the results thereof are set forth in Table III.

Pursuant to the requirements of the patent statutes, the principle of this invention has been explained and exemplified in a manner so that it can be readily practiced by those skilled in the art, such exemplification including what is considered to represent the best embodiment of the invention.

TABLE I

|  | Color properties | | |
|---|---|---|---|
|  | L | A | B |
| Standard Ceramic Tile | 92.64 | −1.00 | 0.30 |
| Sample 1— 0.021% $H_2O_2$ Added* | 97.6 | −0.20 | 0.26 |
| Sample 2— 0.042% $H_2O_2$ Added* | 98.7 | −0.20 | 0.31 |
| Sample 3— No $H_2O_2$ Added | 97.2 | 0.75 | 1.32 |
| (Duplicate Run) | 97.1 | 0.78 | 1.25 |

L Brightness
A (+red, −green)
B (+yellow, −blue)
*Based on weight of lime used

TABLE II

|  | Color properties | | |
|---|---|---|---|
|  | L | A | B |
| Sample 1— 0.021% $H_2O_2$ Added* | 97.8 | −0.18 | 0.29 |
| Sample 2— 0.042% $H_2O_2$ Added* | 98.6 | −0.19 | 0.42 |
| Sample 3— No $H_2O_2$ Added | 97.7 | 0.71 | 0.99 |

*Based on weight of lime used

4

TABLE III

| % H$_2$O$_2$ added** | H$_2$O$_2$ Addition point | Color properties | | |
|---|---|---|---|---|
| | | L | A | B |
| None | None | 98.2* | 0.31* | 0.79* |
| 0.027 | Acid | 99.2 | 0.04 | 0.62 |
| 0.027 | Final Slurry | 98.5 | 0.25 | 0.81 |
| 0.053 | Final Slurry | 99.0 | 0.06 | 0.62 |

*Average of two runs
**Based on weight of lime used

**Claims**

1. A process for producing a food grade calcium phosphate having acceptably white color and purity level, characterized by reacting food grade phosphoric acid and off-colored lime in the presence of 0.01% to 0.3% by weight of hydrogen peroxide, based on the weight of lime used, whereby the hydrogen peroxide bleaches the resulting calcium phosphate into an acceptably white product.

2. Process of claim 1 characterized in that the hydrogen peroxide is added to said phosphoric acid prior to its being reacted with lime.

3. Process of claim 1 characterized in that calcium phosphate in tricalcium phosphate.

4. Process of claim 1 characterized in that the calcium phosphate is monocalcium phosphate monohydrate.

5. Process of claim 1 characterized in that the calcuim phosphate is milled to reduce its size and the milled product has the same acceptably white color as the unmilled calcium phosphate of claim 1.

6. Process of claim 1 characterized in that the hydrogen peroxide is present in amounts of 0.02% to 0.1% by weight of hydrogen peroxide based on the lime used.

7. Process of claim 1 characterized in that the hydrogen peroxide is present in amounts of 0.02% to 0.05% by weight of hydrogen peroxide based on the lime used.

**Patentansprüche**

1. Verfahren zur Herstellung eines Kalziumphosphats von Nahrungsmittelqualität mit annehmbar weißer Farbe und Reinheitshöhe, dadurch gekennzeichnet, daß Phosphorsäure von Nahrungsmittelqualität und mißgefärbter Kalk in Anwesenheit von 0,01 bis 0,3 Gew.% Wasserstoffperoxid, bezogen auf das Gewicht des verwendeten Kalks, umgesetzt werden, wodurch das Wasserstoffperoxid das erhaltene Kalziumphosphat zu einem annehmbar weißen Produkt bleicht.

2. Verfahren nach Anspruch 1, dadurch gekennzeichnet, daß das Wasserstoffperoxid der genannten Phosphorsäure vor ihrer Umsetzung mit dem Kalk zugesetzt wird.

3. Verfahren nach Anspruch 1, dadurch gekennzeichnet, daß das Kalziumphosphat Trikalziumphosphat ist.

4. Verfahren nach Anspruch 1, dadurch gekennzeichnet, daß das Kalziumphosphat Monokalziumphosphatmonohydrat ist.

5. Verfahren nach Anspruch 1, dadurch gekennzeichnet, daß das Kalziumphosphat gemahlen wird, um seine Größe zu vermindern, und das gemahlene Produkt die gleiche annehmbar weiße Farbe hat wie das ungemahlene Kalziumphosphat von Anspruch 1.

6. Verfahren nach Anspruch 1, dadurch gekennzeichnet, daß das Wasserstoffperoxid in Anteilen von 0,02 bis 0,1 Gew.-% Wasserstoffperoxid, bezogen auf den verwendeten Kalk, vorhanden ist.

7. Verfahren nach Anspruch 1, dadurch gekennzeichnet, daß das Wasserstoffperoxid in Anteilen von 0,02 bis 0,05 Gew.-% Wasserstoffperoxid, bezogen auf den verwendeten Kalk, vorhanden ist.

**Revendications**

1. Procédé pour produire un phosphate de calcium de qualité alimentaire ayant une coloration blanche et un niveau de pureté, acceptables, caractérisé en ce qu'on fait réagir un acide phosphorique de qualité alimentaire et de la chaux de couleur pâle en présence de 0,01% à 0,3% du poids de peroxyde d'hydrogène, en se basant sur le poids de la chaux utilisée, le peroxyde d'hydrogène blanchissant ainsi le phosphate de calcium résultant en un produit blanc acceptable.

2. Procédé selon la revendication 1, caractérisé en ce que le peroxyde d'hydrogène est ajouté au dit acide phosphorique avant que l'un fasse réagir celui-ci avec de la chaux.

**0 086 876**

3. Procédé selon la revendication 1, caractérisé en ce que le phosphate de calcium est du phosphate tricalcique.

4. Procédé selon la revendication 1, caractérisé en ce que le phosphate de calcium est du phosphate monocalcique monohydraté.

5. Procédé selon la revendication 1, caractérisé en ce que le phosphate de calcium est moulu pour réduire sa taille, le produit moulu ayant la même couleur blanche acceptable que le phosphate de calcium non moulu suivant la revendication 1.

6. Procédé selon la revendication 1, caractérisé en ce que le peroxyde d'hydrogène est présent suivant des quantités de 0,02% à 0,1% en poids de peroxyde d'hydrogène, en se basant sur la chaux utilisée.

7. Procédé selon la revendication 1, caractérisé en ce que le peroxyde d'hydrogène est présent suivant des quantités de 0,02% à 0,05% en poids de peroxyde d'hydrogène, en se basant sur la chaux utilisée.